# EUROPÄISCHE PATENTSCHRIFT

(11) **EP 0 979 514 B1**
(45) Veröffentlichungstag und Bekanntmachung des Hinweises auf die Patenterteilung: **27.09.2006**
(21) Anmeldenummer: 97953695.0
(22) Anmeldetag: 24.11.1997
(51) Int. Cl.: H01B 1/12, C09D 5/24, C08G 61/12, C09K 3/16

(54) **LEITFÄHIGE ORGANISCH-ANORGANISCHE HYBRIDMATERIALIEN**
CONDUCTING ORGANIC-INORGANIC HYBRID MATERIALS
MATERIAUX HYBRIDES ORGANIQUES-INORGANIQUES CONDUCTEURS

(30) Priorität: 04.12.1996 DE 19650147
(43) Veröffentlichungstag der Anmeldung: 16.02.2000
(73) Patentinhaber: H.C. Starck GmbH, 38642 Goslar (DE)
(72) Erfinder: MAGER, Michael, 51375 Leverkusen (DE); JONAS, Friedrich, D-52066 Aachen (DE); EILING, Aloys, D-44866 Bochum (DE); GUNTERMANN, Udo, 47800 Krefeld (DE)
(74) Vertreter: Colling-Hendelkens, Miriam
(86) Internationale Anmeldenummer: PCT/EP1997/006559
(87) Internationale Veröffentlichungsnummer: WO 1998/025274

(56) Entgegenhaltungen:
- EP-A- 0 825 219
- DATABASE WPI Section Ch, Week 9516 Derwent Publications Ltd., London, GB; Class A41, AN 95-117751 XP002060774 & JP 07 025 885 A (SHOWA DENKO KK) , 27.Januar 1995

## Beschreibung

Die vorliegende Erfindung betrifft Mischungen aus leitfähigen organischen Polymeren und Reaktionsprodukten von polyfunktionellen Organosilanen, leitfähige organisch-anorganische Hybridmaterialien daraus und deren Verwendung zur Beschichtung von Oberflächen.

Glasformteile und Kunststofformteile werden durch Reibung oder Aufbringen von Ladungen, z.B. Elektronenstrahlung in Fernsehbildröhren, elektrostatisch aufgeladen. Diese Ladungen führen dann durch Staubanziehung zu einem schnellen Einstauben der Formteile, was in der Praxis unerwünscht ist. Es besteht daher ein Bedarf, diese Formteile gegen elektrostatische Aufladung zu schützen. Dieser Schutz ist z.B. durch die Beschichtung der Formteile mit einer antistatischen Beschichtung erreichbar. Einer Festlegung in ISO 2878 folgend, versteht man unter antistatischen Werkstoffen solche mit Oberflächenwiderständen zwischen 50 kΩ/□ und 100 MΩ/□. Bei Oberflächenwiderständen < 50 kΩ/□ spricht man von leitfähigen Werkstoffen.

Bei genügend leitfähigen Materialien wird neben der antistatischen Wirkung auch noch eine abschirmende Wirkung gegen elektromagnetische Strahlung, wie sie z.B. aus Kathodenstrahlröhren abgegeben wird, erreicht. Für eine effektive Strahlungsabschirmung muß der Oberflächenwiderstand kleiner als 3 kΩ/□ sein.

Für den praktischen Einsatz müssen diese Beschichtungen auch eine genügende mechanische Festigkeit und Haftung aufweisen. Insbesondere bei Glas als Träger müssen die Schichten ausreichend kratzfest sein, um bei der Reinigung der beschichteten Oberflächen eine Verletzung der Beschichtung und damit den Verlust der antistatischen bzw. leitfähigen Wirkung zu vermeiden.

Aus der Literatur sind elektrisch leitfähige Polymere, z.B. Polythiophene, zur Herstellung antistatischer bzw. leitfähiger Beschichtungen bekannt. Beispiele hierfür finden sich in EP-A 440 957 und DE-OS 42 11 459.

Der Einsatz dieser Polythiophensalze zur antistatischen Ausrüstung von Glas ist in DE-OS 42 29 192 beschrieben. Es hat sich aber gezeigt, daß diese Beschichtungen für einige Anwendungen in der Praxis nicht ausreichend kratzfest sind.

Aus EP-A 17 187 sind kratzfeste Beschichtungen auf Basis hydrolysierter Siloxane bekannt. Diese sind jedoch nicht mit Zubereitungen von Polythiophensalzen verträglich.

In WO 96/05606 sind Poly-3,4-ethylendioxythiophen enthaltende Beschichtungen auf Bildschirmen beschrieben. Um die Kratzfestigkeit der Beschichtungen zu verbessern und antireflektierende Eigenschaften zu erzielen, werden darauf via Sol-Gel-Prozeß, ausgehend z.B. von Metallalkoxiden, Schichten von SiO₂ bzw. TiO₂ aufgebracht.

Von Nachteil ist dabei, daß schon bei Schichtdicken, die nur wenig mehr als 100 nm betragen, die Transmission unter 60% sinkt. Die Schicht muß daher über die ganze Fläche exakt die gleiche Dicke aufweisen. Der reproduzierbare Auftrag solch dünner Beschichtungen ist technisch jedoch schwierig.

Ein weiterer Nachteil dieses Verfahrens ist, daß leitfähige Beschichtungen mit der erforderlichen Kratzfestigkeit nur dann erhalten werden, wenn die leitfähige Schicht mit mindestens einer kratzfesten Deckschicht versehen wird. Für entsprechende Beschichtungen mit antireflektierenden Eigenschaften ist die aufeinanderfolgende Applikation von bis zu vier verschiedenen Schichten nötig. Dies ist technisch außerordentlich aufwendig. Auch wächst mit jeder zusätzlichen Schicht die Gefahr, daß der gesamte Schichtenverbund einen Defekt aufweist.

Aufgabe der vorliegenden Erfindung war daher die Bereitstellung von Mischungen, die, auf geeignete Substrate aufgebracht, nach dem Entfernen der Lösungsmittel gut haftende, leitfähige Beschichtungen mit verbesserter Kratzfestigkeit und Transmission des sichtbaren Lichts ergeben.

Es wurde nun gefunden, daß sich die obengenannten Anforderungen erfüllen lassen, wenn Mischungen aus leitfähigen organischen Polymeren mit Reaktionsprodukten polyfunktioneller Organosilane und gegebenenfalls weiteren Komponenten, wie Metallalkoxiden, Metalloxiden oder Metalloxidhydroxiden eingesetzt werden.

Gegenstand der vorliegenden Erfindung sind daher Mischungen, enthaltend:
A) Zubereitungen von Polythiophenen,
B) Reaktionsprodukte von polyfunktionellen Organosilanen,
C) Reaktionsprodukte von Alkoxiden der Elemente B, Al, Si, Sn, Ti, Zr,
D) gegebenenfalls Metalloxide oder Metalloxidhydroxide der Elemente B, Al, In, Si, Sn, Ti, Zr,
E) Lösungsmittel.

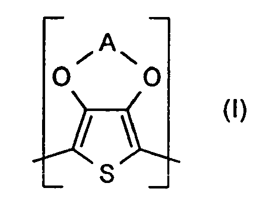

Als Komponente A) werden bevorzugt Zubereitungen von Polythiophenen eingesetzt, wie sie in DE-OS 42 11 459 , EP-A 339 340 und EP-A 440 957 beschrieben sind. Sie enthalten Polythiophensalze vom Typ Polythiophen^{m+} An^{m-}, worin das Polythiophenkation Polythiophen^{m+} positiv geladene oder ungeladene Einheiten der Formel (I) enthält,
worin
- A: für einen gegebenenfalls mit C₁-C₂₀-Atkyl-, -CH₂-OH oder C₆-C₁₄-Arylgruppen substituierten C₁-C₄-Alkylenrest steht. Die Zahl der Einheiten im Polythiophenkation kann zwischen 5 und 100 betragen.
- An^{m-}: steht für ein Polyanion.

Beispiele für erfindungsgemäß verwendbare Polyanionen sind die Anionen von polymeren Carbonsäuren wie Polyacrylsäuren, Polymethacrylsäuren, Polymaleinsäuren, außerdem Anionen von polymeren Sulfonsäuren wie Polystyrolsulfonsäuren und Polyvinylsulfonsäuren. Diese Polycarbonsäuren und Polysulfonsäuren können auch Copolymere von Vinylcarbonsäuren und Vinylsulfonsäuren mit anderen polymerisierbaren Monomeren wie Acrylsäureestern und Styrol sein.

Das mittlere Molekulargewicht M̅_{w} der polymeren Säuren, von denen sich die erfindungsgemäß einsetzbaren Polyanionen ableiten, beträgt 1000 bis 2000000, bevorzugt 2000 bis 500000. Die polymeren Säuren oder ihre Alkalisalze sind im Handel erhältlich oder nach bekannten Verfahren herstellbar, wie sie z.B. in Houben-Weyl: "Methoden der organischen Chemie", Band E20, "Makromolekulare Stoffe", Teil 2, S.1141ff. beschrieben sind.

Als Komponente B) enthalten die erfindungsgemäßen Mischungen Reaktionsprodukte aus polyfunktionellen Organosilanen. Polyfunktionelle Organosilane im Sinne der Erfindung sind solche, die pro Molekül mindestens 2, bevorzugt mindestens 3, Siliciumatome enthalten, die jeweils 1 bis 3 Alkoxy- oder Hydroxylgruppen aufweisen und über mindestens eine Si-C-Bindung mit einer zwei Siliciumatome verbindenden Baueinheit verknüpft sind.

Verbindende Baueinheiten im Sinne der Erfindung können im einfachsten Falle lineare oder verzweigte C₁- bis C₁₀-Alkylenketten, C₅- bis C₁₀-Cycloalkylenreste, aromatische Reste wie Phenyl, Naphtyl oder Biphenyl, oder auch Kombinationen von aromatischen und aliphatischen Resten sein. Die aliphatischen und aromatischen Reste können auch Heteroatome wie Si, N, O, S oder F enthalten. Weiterhin seien als verknüpfende Baueinheiten auch ketten-, ring- oder käfigförmige Siloxane, z.B. Silsesquioxane, genannt.

Nachfolgend sind Beispiele für verknüpfende Baueinheiten aufgeführt, wobei mit X Si-Atome bezeichnet werden, die 1 bis 3 hydrolysierbare und/oder kondensationsvernetzende Gruppen aufweisen und mit Y entsprechende Si-Atome, die über eine Alkylenkette an die verknüpfende Baueinheit gebunden sind; n steht für eine Zahl 1 bis 10, m für eine Zahl 1 bis 6: 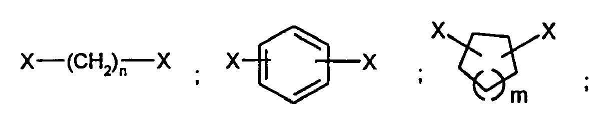 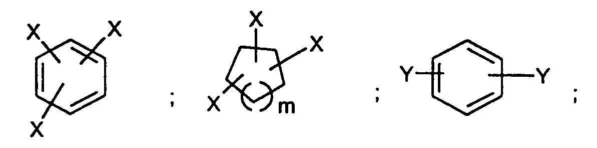 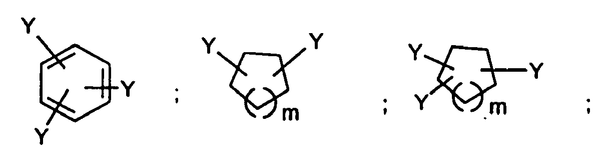 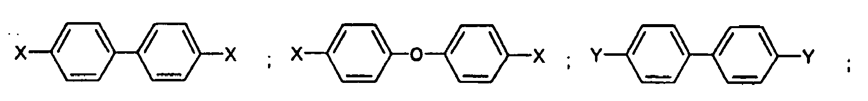 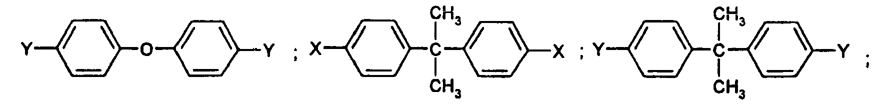 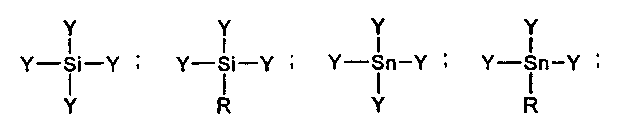 wobei R ein organischer Rest, z.B. Alkyl, Cycloalkyl, Aryl oder Alkenyl ist.

Beispiele für polyfunktionelle Organosilane sind Verbindungen der allgemeinen Formel (II)

R³₄₋ᵢSi[(CH₂)ₙSi(OR⁴)ₐR⁵₃₋ₐ]ᵢ (II)

mit
i = 2 bis 4, bevorzugt i = 4,
n = 1 bis 10, bevorzugt n = 2 bis 4, besonders bevorzugt n = 2, und
R³ = Alkyl oder Aryl,
R⁵ = Alkyl oder Aryl, bevorzugt R⁵ = Methyl,
a = 1 bis 3,
wobei
R⁴ = Alkyl, Aryl, bevorzugt R⁴= Methyl, Ethyl, Isopropyl ist;
für den Fall a = 1 kann R⁴ auch Wasserstoff sein.

Weitere Beispiele sind cyclische Verbindungen der allgemeinen Formel (III) 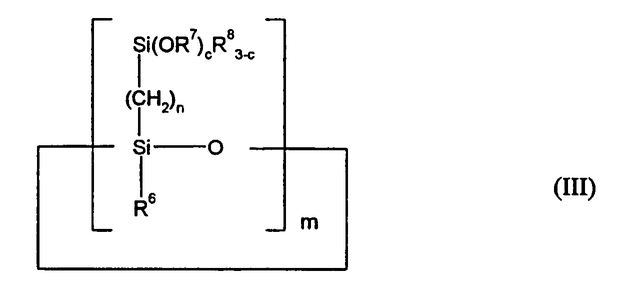 mit
- m =: 3 bis 6, bevorzugt m = 3 oder 4,
- n =: 2 bis 10, bevorzugt n = 2,
- R⁶=: C₁-C₆-Alkyl oder C₆-C₁₄-Aryl, bevorzugt R⁶= Methyl, Ethyl, besonders bevorzugt R⁶ = Methyl,
- R⁸=: Alkyl, Aryl, bevorzugt R⁸ = Methyl,
- c =: bis 3, wobei
- R⁷=: Alkyl, Aryl, bevorzugt R⁷= Methyl, Ethyl, Isopropyl ist;
für den Fall c = 1 kann R⁷ auch Wasserstoff sein.

Weitere Beispiele für polyfunktionelle Organosilane sind Verbindungen der allgemeinen Formel (IV)

Si[OSiR¹¹₂(CH₂)ₚSi(OR⁹)_{d}R¹⁰_{3-d}]₄ (IV)

mit p = 1 bis 10, bevorzugt p = 2 bis 4, besonders bevorzugt p = 2,
- R¹¹=: Alkyl, Aryl, bevorzugt R¹¹= Methyl,
- R¹⁰=: Alkyl, Aryl, bevorzugt R¹⁰= Methyl,
- d =: 1 bis 3, wobei
- R⁹=: Alkyl, Aryl, bevorzugt R⁹= Methyl, Ethyl, Isopropyl ist;
für den Fall d = 1 kann R⁹ auch Wasserstoff sein.

Beispiele für erfindungsgemäße polyfunktionelle Organosilane sind auch Silanole wie Si[(CH₂)₂Si(OH)(CH₃)₂]₄ und cyclo-[OSiMe((CH₂)₂Si(OH)Me₂)]₄, oder Alkoxide wie cyclo-[OSiMe((CH₂)₂Si(OEt)₂Me)]₄ und cyclo-[OSiMe((CH₂)₂Si(OMe)Me₂)]₄.

Die erfindungsgemäßen Mischungen enthalten als Komponente C) Reaktionsprodukte von Alkoxiden der Elemente B, Al, Si, Sn, Ti, Zr.

Die bei der Herstellung der erfindungsgemäßen Mischungen einsetzbaren Alkoxide entsprechen bevorzugt der allgemeinen Formel M(OR)_{y}, wobei y den Wert 3 annimmt, wenn M für Bor oder Aluminium steht und y den Wert 4 hat, wenn M Silicium, Zinn, Titan oder Zirkon ist. Beispiele für Alkoxide, die bei der Herstellung der erfindungsgemäßen Mischungen zugesetzt werden, um eine Verbesserung der Kratzfestigkeit von daraus hergestellten Beschichtungen zu erreichen, sind Si(OEt)₄, Al(OⁱPr)₃ oder Zr(OⁱPr)₄, bevorzugt ist Si(OEt)₄. Durch Zusatz von Titanalkoxiden, z.B. Ti(OⁱPr)₄ oder Ti(OⁿBu)₄, kann der Brechungsindex des aus den erfindungsgemäßen Mischungen hergestellten leitfähigen, organisch-anorganischen Hybridmaterials erhöht werden. Während des Herstellungsprozesses der erfindungsgemäßen Mischungen werden aus den Alkoxiden Solvolyse- und Kondensationsprodukte gebildet, beispielsweise durch Reaktion mit dem Lösungsmittel, polyfunktionellen Organosilanen, Polythiophenzubereitungen, Katalysatoren oder durch Selbstkondensation. Um die Reaktivität von leicht hydrolysier- und kondensierbaren Metallalkoxiden zu vermindern und die Bildung von Niederschlägen zu vermeiden, können diese, noch bevor sie mit den polyfunktionellen Organosilanen zur Reaktion gebracht werden, zuvor bereits mit Wasser umgesetzt werden. Diese Solvolyse- und Kondensationsprodukte bilden die Komponente C) der erfindungsgemäßen Mischungen.

Angaben zur Hydrolyse und Kondensation von polyfunktionellen Organosilanen und deren Mischungen mit Metallalkoxiden, finden sich z.B. in DE-OS 196 03 242, der deutschen Patentanmeldung 196 03 241.5 und WO 94/06807.

Die polyfunktionellen Organosilane werden dabei, bevorzugt in einem Lösungsmittel, beispielsweise einem Alkohol, und gegebenenfalls in Anwesenheit von Metallalkoxiden, mit Wasser in Gegenwart eines Katalysators zur Reaktion gebracht. Als Katalysatoren werden anorganische oder organische Säuren eingesetzt, beispielsweise Ameisensäure. Die Solvolyse- und Kondensationsprodukte der polyfunktionelle Organosilane bilden die Komponente B) der erfindungsgemäßen Mischungen.

Die erfindungsgemäßen Mischungen können als Komponente D) Metalloxide oder Metalloxidhydroxide der Elemente B, Al, In, Si, Sn, Ti oder Zr enthalten. Auch Mischmetalloxide, z.B. Indium-Zinnoxide (ITO), können eingesetzt werden. Um transparente Beschichtungen zu erhalten, werden bevorzugt Partikel mit Primärteilchengrößen im Bereich von 1 bis 50 nm eingesetzt. Deren Einarbeitung in die erfindungsgemäßen Mischungen gelingt am besten, wenn die Partikel als Dispersion in einem Lösungsmittel, wie z.B. Wasser oder Alkoholen, zugegeben werden. Als Beispiel hierfür sei eine Dispersion von SiO₂ (Primärteilchengröße ca. 9 nm) in Isopropanol genannt.

Durch Zugabe von Füllstoffen wie Glasmehl, Calciumcarbonat, Calciumsulfat, Bariumsulfat oder Schichtsilikaten (Talkum, Kaolin, Glimmer) kann die Leitfähigkeit der aus den erfindungsgemäßen Mischungen herstellbaren amorphen organisch-anorganischen Hybridmaterialien weiter verbessert werden.

Aus den durch Umsetzung von polyfunktionellen Organosilanen bzw. deren Mischungen mit Alkoxiden, Metalloxiden oder Metalloxidhydroxiden erhaltenen Reaktivlösungen werden die erfindungsgemäßen Mischungen hergestellt, indem man Zubereitungen von Polythiophenen unter Rühren zugibt. Um homogene Mischungen zu erhalten, werden die Komponenten bevorzugt mit Lösungsmitteln, die zumindest teilweise wassermischbar sind, verdünnt, da die Polythiophen-Zubereitung im allgemeinen nur als verdünnte, wäßrige Lösung hergestellt werden kann und mit der im Reaktivlösung meist nur in einem engen Bereich homogene Mischungen ergibt.

Es ist darüber hinaus auch möglich, die entsprechenden Monomere, z.B. 3,4-Ethylendioxythiophen, zur Reaktivlösung zu geben und diese zu polymerisieren, beispielsweise in Gegenwart von Eisensulfonat.

Als Lösungsmittel, mit welchen die Reaktivlösungen vor Zugabe der PolythiophenZubereitungen verdünnt werden können, seien z.B. Alkohole wie Methanol, Ethanol, Isopropanol, n-Butanol, sec.-Butanol, Ethylenglycol oder Glycerin, Ketone wie Aceton oder Methylethylketon und Amide wie N,N-Dimethylformamid oder N-Methylpyrrolidon genannt. Es können auch Mischungen von zwei oder mehreren Lösungsmitteln eingesetzt werden.

Vorzugsweise beträgt der Anteil an Polythiophensalzen in den erfindungsgemäßen Mischungen 0,1 bis 20 Gew.-%, bevorzugt 1 bis 10 Gew.-%, bezogen auf die Summe der Komponenten A), B) und C).

Die erfindungsgemäßen Mischungen enthalten als Komponente E) Lösungsmittel. Diese dienen dazu, eine homogene Mischung der Einzelkomponenten zu erzielen. Als Lösungsmittel können in den erfindungsgemäßen Mischungen Wasser, anorganische Säuren wie Salzsäure, oder organische Lösungsmittel enthalten sein. Organische Lösungsmittel können beispielsweise Alkohole wie Methanol, Ethanol, Isopropanol, n-Butanol, sec.-Butanol, Ethylenglycol oder Glycerin, Ketone wie Aceton oder Methylethylketon, Amide wie N,N-Dimethylformamid oder N-Methylpyrrolidon oder organische Säuren wie Ameisensäure sein. Meist werden die erfindungsgemäßen Mischungen ein Gemisch von Lösungsmitteln enthalten, da die zur Herstellung der erfindungsgemäßen Mischungen erforderlichen Komponenten meist in gelöster Form eingesetzt werden.

In einer besonderen Ausführungsform wird zur Herstellung der erfindungsgemäßen Mischungen zunächst ein Organosilan der Formel Si[(CH₂)₂Si(OH)(CH₃)₂]₄ in Gegenwart von Tetraethylorthosilikat (1 Mol :4 Mol) in Ethanol mit Wasser und Ameisensäure zur Reaktion gebracht; nach einer Stunde Reaktionszeit wird mit n-Butanol und Ethylenglycol verdünnt und eine wäßrige Lösung einer Zubereitung von Poly-3,4-ethylendioxythiophen/Polystyrolsulfonsäure zugegeben.

Durch Entfernen des Lösungsmittels aus den erfindungsgemäßen Mischungen werden anorganisch-organische Hybridmaterialien erhalten. Diese lassen sich beispielsweise als antistatische bzw. leitfähige Oberflächenbeschichtung verwenden.

Dazu werden die erfindungsgemäßen Mischungen auf Oberflächen aufgebracht; nach dem Verdampfen der Lösungsmittel und dem Aushärten des gebildeten organisch-anorganischen Hybridmaterials, erhält man leitfähige, kratzfeste Beschichtungen.

Die Beschichtung von Oberflächen mit den erfindungsgemäßen Mischungen kann durch gängige Techniken, z.B. Sprühen, Rakeln, Tauchen, Fluten oder Schleudern (Spin-Coating), erfolgen.

Die aufgebrachte Schicht an anorganisch-organischem Hybridmaterial wird bevorzugt eine Dicke von 20 nm bis 100 µm, besonders bevorzugt eine Dicke von 100 nm bis 10 µm aufweisen. Die Leitfähigkeit der Schichten beträgt bevorzugt 0,2 bis 10⁸ Ω/□, besonders bevorzugt 100 bis 10⁸ Ω/□.

Die Aushärtung der Beschichtungen erfolgt bei Temperaturen von 15°C bis 250°C, bevorzugt von 50°C bis 200°C, besonders bevorzugt von 100°C bis 200°C.

Mit den erfindungsgemäßen Mischungen können beispielsweise Oberflächen von Formkörpem und Folien aus anorganischen oder organischen Materialien wie Kunststoffen beschichtet werden. Beispiele für geeignete Kunststoffe sind solche auf Basis von Polyethylen, Polypropylen, Polyestern wie Polyethylenterephthalat und Polyethylennaphthalat, Polystyrol, Polycarbonat, ABS, Polyacrylat, Polyacrylnitril, Cellulosederivaten wie Celluloseacetat, Polyamiden, Polyvinylchlorid, gegebenenfalls glasfaserverstärkten Epoxidharzen sowie Copolymere bzw. Blends der vorgenannten Polymeren.

Besonders geeignet sind die erfindungsgemäßen Mischungen zur Beschichtung von anorganischen Formkörpern aus Materialien wie Glas oder Keramik, z.B. Aluminiumoxid, Siliciumcarbid oder Siliciumnitrid enthaltenden Materialien.

Bevorzugt werden die erfindungsgemäßen Mischungen zur antistatischen bzw. leitfähigen Beschichtung von Kathodenstrahlröhren aus Glas eingesetzt.

### Beispiele

Als leitfähiges organisches Polymer wurde eine ca. 1,3%ige Poly-3,4-ethylendioxythiophen/Polystyrolsulfonatlösung (PEDT/PSS) in Wasser eingesetzt.

Die verwendeten polyfunktionellen Organosilane, z.B. Si[(CH₂)₂Si(OH)(CH₃)₂]₄ oder *cyclo*-[OSiMe((CH₂)₂Si(OEt)₂Me)]₄, wurden durch Hydosilylierung von Tetravinylsilan bzw. *cyclo*-[OSiMe(C₂H₃)]₄ mit HSiClMe₂ bzw. HSiCl₂Me und nachfolgender Hydrolyse bzw. Alkoholyse hergestellt. Nähere Angaben hierzu finden sich in DE-OS 196 03 242 und der deutschen Patentanmeldung 196 03 241.5.

Der Oberflächenwiderstand wurde in Anlehnung an DIN IEC 93 bestimmt. Dazu wurden zwei 5 mm breite und 5 cm lange Leitsilberstreifen im Abstand von 5 cm auf die Probenoberfläche aufgetragen. Die Aushärtung der Leitsilberstreifen erfolgte, wenn nicht anders angegeben, durch 15minütiges Tempern bei 160°C.

Die Bleistifthärte wurde in Anlehnung an ASTM D 3363 bestimmt.

### Beispiel 1

(a) 20 g Si[(CH₂)₂Si(OH)(CH₃)₂]₄, 50 ml Ethanol, 40 ml Tetraethylorthosilikat (TEOS), 10 ml Wasser und 6 ml Ameisensäure wurden in dieser Reihenfolge unter Rühren zusammengegeben und danach weitere 90 Minuten lang gerührt.
(b) Zu 40 ml der Lösung aus (a) wurden unter Rühren 40 ml Ethylenglycol, 40 ml n-Butanol und 40 ml der PEDT/PSS-Lösung gegeben. Mit dieser homogenen Mischung wurden 3 Glasplatten durch Sprühen mit Stickstoff als Trägergas beschichtet. Diese wurden unmittelbar danach 15 Minuten bei 160°C getrocknet; nach dem Abkühlen wurde der Oberflächenwiderstand vermessen.

| Probe | Oberflächenwiderstand [Ω/□] | Schichtdicke |
|---|---|---|
| 1 | 15000 | < 0,5 µm |
| 2 | 12000 | 1,4 µm |
| 3 | 12000 | nicht bestimmt |

Alle Filme waren transparent.
(c) Die nach (b) hergestellte Mischung wurde 2 Tage im Kühlschrank gelagert (ca. 4°C), wonach keine Veränderung beobachtet werden konnte. Die homogene Mischung wurde dann mittels Rakel (Naßfilmdicke 120 µm) auf eine Glasplatte aufgebracht und der Oberflächenwiderstand bestimmt.

| Probe | Oberflächenwiderstand [Ω/□] | Schichtdicke |
|---|---|---|
| 4 | 2200 | 4,8 µm |

Die Beschichtung war rißfrei, transparent und homogen.

### Beispiel 2

(a) 10 g Si[(CH₂)₂Si(OH)(CH₃)₂]₄, 25 ml Ethanol, 20 ml TEOS (Tetraethylorthosilikat), 5 ml Wasser und 3 ml Ameisensäure wurden in dieser Reihenfolge unter Rühren zusammengegeben. Nach ca. 10 Minuten wurde durch herkömmliches Filterpapier filtriert und für weitere 80 Minuten gerührt.
(b) Zu 40 ml der Lacklösung aus (a) wurden unter kräftigem Rühren 40 ml Ethylenglycol, 40 ml n-Butanol und 60 ml der wäßrigen PEDT/PSS-Lösung (wurde zuvor durch Watte filtriert) gegeben und 10 Minuten lang gerührt. Die so erhaltene, homogene Mischung wurde mit Stickstoff als Trägergas auf Glasplatten gesprüht und die Beschichtung 15 min bei 160°C ausgehärtet.

| Probe | Oberflächenwiderstand [Ω/□] | Schichtdicke | Transmission (400-700 nm) | Bleistifthärte |
|---|---|---|---|---|
| 1 | 4200 | 1,7 µm | > 83 % | > 7H |
| 2 | 5500 | 1,1 µm | > 90 % | > 7H |

Beide Filme waren transparent.

### Beispiel 3

(a) 25 g einer 36,5%igen Lösung von cyclo-[OSiMe((CH₂)₂Si(OH)Me₂)]₄, 12,5 ml TEOS, 3,2 ml Wasser und 2 ml Ameisensäure wurden in dieser Reihenfolge unter Rühren zusammengegeben und danach noch für 75 Minuten gerührt. Es wurde eine klare, farblose Lösung erhalten.
(b) Die nach (a) erhaltene Lacklösung wurde gemäß der Tabelle unter Rühren mit Lösungsmitteln verdünnt und schließlich mit der wäßrigen PEDT/PSS-Lösung vermischt. Mit den so erhaltenen, homogenen Mischungen wurden Filme mit einer Naßfilmdicke von 120 µm auf Glasplatten gerakelt; diese wurden 10 Minuten lang bei Raumtemperatur und 15 Minuten lang bei 160°C getrocknet.

| Probe | 1 | 2 | 3 | 4 |
|---|---|---|---|---|
| Lacklösung aus (a) [ml] | 1 | 1 | 1 | 1 |
| Ethylenglycol [ml] | 0,5 | 0,5 | - | 1 |
| 1-Butanol [ml] | 0,5 | 1 | - | - |
| NMP [ml] | 0,5 | - | 1 | - |
| 2-Butanol [ml] | 0,5 | - | 1 | - |
| 1-Propanol [ml] | 0,5 | - | - | 1 |
| PEDT/PSS [ml] | 1 | 0,5 | 1 | 1 |
| Bleistifthärte | > 7 H | > 6 H | > 7 H | > 7 H |
| Oberflächenwiderstand [kΩ/□] | 40 | 188 | 80 | 39 |

Die Leitsilberstreifen wurden 1 h bei 160°C ausgehärtet. Alle Filme waren rißfrei, transparent und homogen.

### Beispiel 4

(a) 10 g Si[(CH₂)₂Si(OH)(CH₃)₂]₄, 25 ml Ethanol, 20 ml Tetraethylorthosilikat (TEOS), 5 ml Wasser und 3 ml Ameisensäure wurden in dieser Reihenfolge unter Rühren zusammengegeben und danach für weitere 90 Minuten gerührt.
(b) Zu 20 ml der Lösung aus (a) wurden unter Rühren 40 ml Ethylenglycol, 40 ml n-Butanol und 40 ml der PEDT/PSS-Lösung gegeben.
(c) Zu 20 ml der Lösung aus (a) wurden unter Rühren 60 ml Ethylenglycol, 60 ml n-Butanol und 60 ml der PEDT/PSS-Lösung gegeben.

Die homogenen Mischungen aus (b) und (c) wurden 17 Stunden lang im Kühlschrank verwahrt. Danach wurden jeweils 3 Glasplatten durch Sprühen mit Stickstoff als Trägergas beschichtet und unmittelbar danach 15 Minuten lang bei 160°C getrocknet. Nach dem Abkühlen wurde der Oberflächenwiderstand vermessen . Proben 1 bis 3 wurden mit Lösung (b) hergestellt, Proben 4 bis 6 mit Lösung (c).

| Probe | Oberflächenwiderstand [Ω/□] | Schichtdicke |
|---|---|---|
| 1 | 3400 | 0,8 µm |
| 2 | 2400 | 0,9 µm |
| 3 | 1700 | nicht bestimmt |
| 4 | 1500 | nicht bestimmt |
| 5 | 2500 | < 0,5 µm |
| 6 | 2500 | < 0,5 µm |

Alle Filme waren transparent.

### Beispiel 5

(a) Zu 40 ml der nach Beispiel 1 (a) hergestellten Lacklösung wurden unter Rühren 40 ml Ethylenglycol, 40 ml 1-Butanol und 80 ml derPEDT/PSS-Dispersion gegeben.
(b) Zu 2 ml der nach (a) präparierten Mischung wurden unter Rühren ca. 5 mg Glimmer (Mica W1, Hersteller Norwegian Talc) gegeben. Nach 10minütigem Rühren wurde ein Film (Naßfilmdicke 120 µm) auf eine Glasplatte gerakelt und 15 Minuten bei 160°C ausgehärtet. Der Oberflächenwiderstand der Probe betrug 690 Ω/□.

### Beispiel 6

20 g Cyclo-[OSiMe((CH₂)₂Si(OM)Me₂)]₄, 40ml Isopropanol, 25,7 g TEOS und 4,45 g 0,1 N Salzsäure wurden unter Rühren zusammengegeben und eine Stunde weitergerührt. Dann wurde mit 60 ml Ethylenglycol und 22 ml NMP verdünnt. Zu 1,3 ml dieser Lösung wurden dann 1 ml der PEDT/PSS-Dispersion und weitere 0,25 ml Ethylenglycol gegeben. Nach Aufrakeln der Lösung auf eine Glasplatte (Naßfilmdicke 120 µm) wurde nach Abdampfen der flüchtigen Bestandteile 1 h bei 140°C ausgehärtet. Nach Auftrag des Leitsilbers und Einbrennen bei 160°C (15 min) wurde die Oberflächenleitfähigkeit mit 225 Ω/□ bestimmt. Die Bleitstifthärte betrug 6 H.

## Patentansprüche

1. Mischungen enthaltend
A) Zubereitungen von Polythiophenen enthaltend Polythiophensalze vom Typ Polythiophen^{m+} An^{m-}, worin das Polythiophenkation Polythiophen^{m+} positiv geladene oder ungeladene Einheiten der Formel (I) enthält, 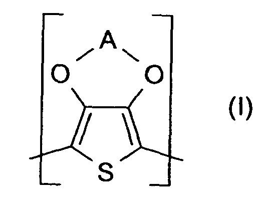 worin
A für einen gegebenenfalls mit C₁-C₂₀-Alkyl-, -CH₂-OH oder C₆₋C₁₄-Arylgruppen substituierten C₁-C₄-Alkylenrest steht,
und
An^{m-} für ein Polyanion steht.
B) Solvolyse- und Kondensationsprodukte von polyfunktionellen Organosilanen, wobei polyfunktionelle Organosilane pro Molekül mindestens 2 Siliciumatome enthalten, die jeweils 1 bis 3 Alkoxy- oder Hydroxylgruppen aufweisen und über mindestens eine Si-C-Bindung mit einer zwei Siliciumatome verbindenden Baueinheit verknüpft sind, wobei die verbindende Baueinheit eine lineare oder verzweigte C₁- bis C₁₀-Alkylenkette, ein C₅- bis C₁₀-Cycloalkylenrest, ein aromatischer Rest oder eine Kombination von aromatischen und aliphatischen Resten, wobei die aliphatischen und aromatischen Reste gegebenenfalls Heteroatome wie Si, N, O, S oder F enthalten, oder ein ketten-, ring- oder käfigförmiges Siloxane ist.
C) Reaktionsprodukte von Alkoxiden der Elemente B, Al, Si, Sn, Ti, Zr,
D) gegebenenfalls Metalloxide oder Metalloxidhydroxide der Elemente B, Al, In, Si, Sn, Ti, Zr
E) Lösungsmittel.

2. Mischungen gemäß Anspruch 1, **dadurch gekennzeichnet, dass** die polyfunktionellen Organosilane Verbindungen der allgemeinen Formel (II)
R³₄₋ᵢSi[(CH₂)ₙSi(OR⁴)ₐR⁵₃₋ₐ]ᵢ (II)
worin
i eine Zahl von 2 bis 4,
n eine Zahl von 1 bis 10,
R³ Alkyl oder Aryl,
R⁵ Alkyl oder Aryl,
a eine Zahl von 1 bis 3 und
R⁴ Alkyl oder Aryl ist, oder für den Fall, dass a gleich 1 ist, R⁴ auch Wasserstoff sein kann,
oder
cyclische Verbindungen der allgemeinen Formel (III) 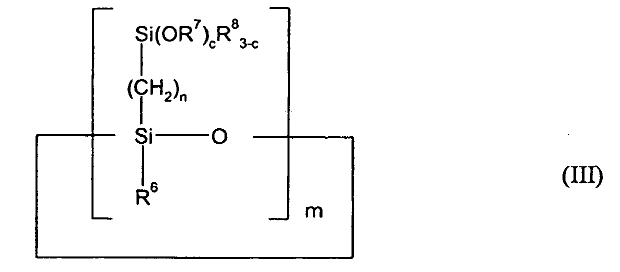 worin
m für eine Zahl von 3 bis 6,
n für eine Zahl von 2 bis 10,
R⁶ C₁-C₆-Alkyl oder C₆-C₁₄-Aryl,
R⁸ Alkyl oder Aryl,
c für eine Zahl von 1 bis 3 und
R⁷ Alkyl oder Aryl ist, oder für den Fall, dass c gleich 1 ist, R⁷ auch Wasserstoff sein kann,
oder
Verbindungen der allgemeinen Formel (IV)
Si[OSiR¹¹₂(CH₂)ₚSi(OR⁹)_{d}R¹⁰_{3-d}]₄ (IV)
worin
p eine Zahl von 1 bis 10,
R¹¹ Alkyl oder Aryl,
R¹⁰ Alkyl oder Aryl,
d eine Zahl von 1 bis 3 und
R⁹ Alkyl oder Aryl ist, oder für den Fall, dass d = 1 ist, R⁹ auch Wasserstoff sein kann,
oder Silanole wie Si[(CH₂)₂Si(OH)(CH₃)₂]₄ und cyclo-[OSiMe((CH₂)₂Si(OH)Me₂)]₄,
oder Alkoxide wie cyclo-[OSiMe((CH₂)₂Si(OEt)₂Me)]₄ und cyclo-[OSiMe((CH₂)₂Si(OMe)Me₂)]₄ sind.

3. Anorganisch-organische Hybridmaterialien, erhältlich aus Mischungen gemäß Anspruch 1 oder 2 durch Entfernen des Lösungsmittels.

4. Verwendung der anorganisch-organischen Hybridmaterialien gemäß Anspruch 3 als Oberflächenbeschichtung.

## Claims

1. Mixtures containing
A) preparations of polythiophenes containing polythiophene salts of the polythiophene^{m+} An^{m-} type, wherein the polythiophene cation polythiophene^{m+} contains positively charged or uncharged units of the formula (I), 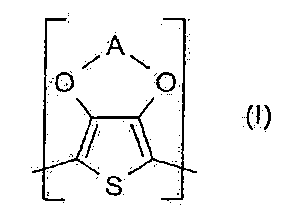 wherein
A stands for a C₁-C₄-alkylene radical optionally substituted by C₁-C₂₀-alkyl-, -CH₂-OH or C₆-C₁₄-aryl groups,
and
An^{m-} stands for a polyanion.
B) solvolysis and condensation products of polyfunctional organosilanes, wherein polyfunctional organosilanes contain per molecule at least 2 silicon atoms which each exhibit 1 to 3 alkoxy or hydroxyl groups and are linked by at least one Si-C bond to a building unit connecting two silicon atoms, wherein the connecting building unit is a linear or branched C₁- to C₁₀-alkylene chain, a C₅- to C₁₀-cycloalkylene radical, an aromatic radical or a combination of aromatic and aliphatic radicals, wherein the aliphatic and aromatic radicals optionally contain heteroatoms such as Si, N, O, S or F, or a chain-, ring- or cage-shape siloxane.
C) reaction products of alkoxides of the elements B, Al, Si, Sn, Ti, Zr,
D) optionally metal oxides or metal oxide hydroxides of the elements B, Al, In, Si, Sn, Ti, Zr
E) solvent.

2. Mixtures according to Claim 1, **characterised in that** the polyfunctional organosilanes are compounds of the general formula (II)
R³₄₋ᵢSi[(CH₂)ₙSi(OR⁴)ₐR⁵₃₋ₐ]ᵢ (II)
wherein
i is a number from 2 to 4,
n a number from 1 to 10,
R³ alkyl or aryl,
R⁵ alkyl or aryl,
a a number from 1 to 3 and
R⁴ alkyl or aryl, or where a is equal to 1, R⁴ can also be hydrogen,
or
cyclic compounds of the general formula (III) 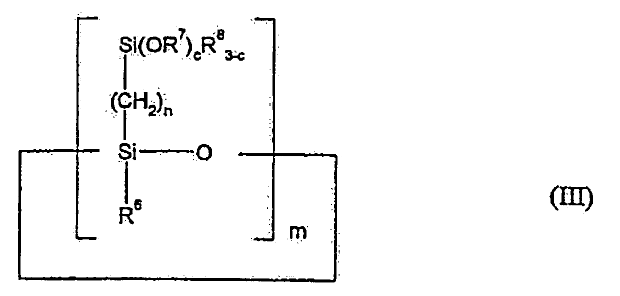 wherein
m stands for a number from 3 to 6,
n for a number from 2 to 10,
R⁶ C₁-C₆-alkyl or C₆-C₁₄-aryl,
R⁸ alkyl or aryl,
c for a number from 1 to 3 and
R⁷ is alkyl or aryl, or where c is equal to 1, R⁷ can also be hydrogen,
or
compounds of the general formula (IV)
Si[OSiR¹¹₂(CH₂)ₚSi(OR⁹)_{d}R¹⁰_{3-d}]₄ (IV)
wherein
p is a number from 1 to 10,
R¹¹ alkyl or aryl,
R¹⁰ alkyl or aryl,
d a number from 1 to 3 and
R⁹ alkyl or aryl, or where d = 1, R⁹ can also be hydrogen,
or silanols such as Si[(CH₂)₂Si(OH)(CH₃)₂]₄ and cyclo-[OSiMe((CH₂)₂Si(OH)Me₂)]₄,
or alkoxides such as cyclo-[OSiMe((CH₂)₂Si(OEt)₂Me)]₄ and cyclo-[OSiMe((CH₂)₂Si(OMe)Me₂)]₄.

3. Inorganic-organic hybrid materials, obtainable from mixtures according to Claim 1 or 2 by removing the solvent.

4. Use of the inorganic-organic hybrid materials according to Claim 3 as surface coating.

## Revendications

1. Mélanges contenant :
A) des compositions de polythiophènes contenant des sels de polythiophène de type polythiophène^{m+} An^{m-}, où le cation polythiophène, polythiophène^{m+}, contient des unités chargées positivement ou non chargées de la formule (I) : 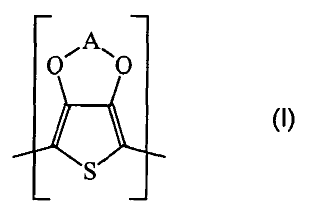 où
A représente un reste alcoylène en C₁-C₄, le cas échéant substitué par des radicaux alcoyle C₁-C₂₀, -CH₂-OH ou aryle en C₆-C₁₄, et
An^{m-} représente un polyanion ;
B) des produits de solvolyse et de condesation d'organosilanes polyfonctionnels, où les organosilanes polyfonctionnels contiennent par molécule, au moins 2 atomes de silicium, qui présentent chaque fois, 1 à 3 groupes alcoxy ou hydroxy et sont reliés par au moins une liaison Si-C à une unité d'édification reliant deux atomes de silicium, où l'unité d'édification reliante est une chaîne alcoylène en C₁ à C₁₀ linéaire ou ramifiée, un reste cycloalcoylène en C₅ à C₁₀, un reste aromatique ou une combinaison de restes aromatiques et aliphatiques, où les restes aliphatiques et aromatiques peuvent contenir le cas échéant, des hétéroatomes comme Si, N, O, S ou F, ou un siloxane de type chaîne, cycle ou cage ;
C) des produits de réaction d'alcoxydes des éléments B, Al, Si, Sn, Ti, Zr ;
D) le cas échéant, des oxydes métallique ou des hydroxydes métalliques des éléments B, A1, In, Si, Sn, Ti, Zr ;
E) un solvant.

2. Mélanges suivant la revendication 1, **caractérisés en ce que** les organosilanes polyfonctionnels sont des composés de la formule générale (II) :
R³₄₋ᵢSi[(CH₂)ₙSi(OR⁴)ₐR⁵₃₋ₐ]ᵢ (II)
où
i est un nombre allant de 2 à 4,
n est un nombre allant de 1 à 10,
R³ est un radical alcoyle ou aryle,
R⁵ est un radical alcoyle ou aryle,
a est un nombre allant de 1 à 3, et
R⁴ est un radical alcoyle ou aryle, ou dans le cas où a est égal à 1, R⁴ peut également être l'atome d'hydrogène,
ou
des composés cycliques de la formule générale (III) : 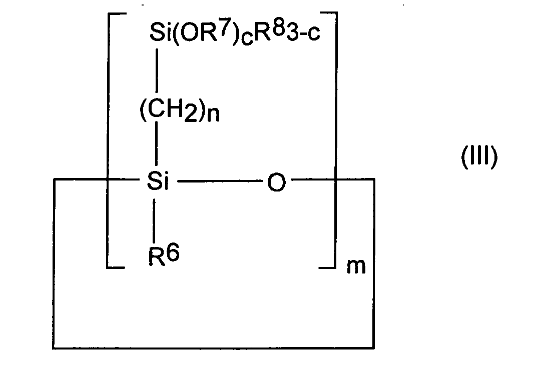 où
m est un nombre allant de 3 à 6,
n est un nombre allant de 2 à 10,
R⁶ est un radical alcoyle en C₁-C₆ ou aryle en C₆-C₁₄,
R⁸ est un radical alcoyle ou aryle,
c est un nombre allant de 1 à 3, et
R⁷ est un radical alcoyle ou aryle, ou dans le cas où c est égal à 1, R⁷ peut également être l'atome d'hydrogène,
ou
des composés de la formule générale (IV) :
Si[OSiR¹¹₂(CH₂)ₚSi(OR⁹)_{d}R¹⁰_{3-d}]₄ (IV)
où
p est un nombre allant de 1 à 10,
R¹¹ est un radical alcoyle ou aryle,
R¹⁰ est un radical alcoyle ou aryle,
d est un nombre allant de 1 à 3, et
R⁹ est un radical alcoyle ou aryle, ou dans le cas où d est égal à 1, R⁹ peut également être l'atome d'hydrogène,
ou des silanols comme Si[(CH₂)₂Si(OH)(CH₃)₂]₄ et cyclo[OSiMe((CH₂)₂Si(OH)Me₂)]₄,
ou des alcoxydes comme cyclo [OSiMe((CH₂)₂Si(OEt)₂Me)]₄ et cyclo [OSiMe((CH₂)₂Si(OMe)Me₂)]₄.

3. Matériaux hybrides inorganiques-organiques, obtenus à partir des mélanges suivant la revendication 1 ou 2 par élimination du solvant.

4. Utilisation des matériaux hybrides inorganiques-organiques suivant la revendication 3, comme revêtement de surface.
